(19) Europäisches Patentamt
European Patent Office
Office européen des brevets

(11) **EP 4 621 874 A1**

(12) **EUROPEAN PATENT APPLICATION**
published in accordance with Art. 153(4) EPC

(43) Date of publication:
24.09.2025 Bulletin 2025/39

(21) Application number: 23905061.0

(22) Date of filing: 20.03.2023

(51) International Patent Classification (IPC):
*H01M 4/36* (2006.01)     *H01M 4/58* (2010.01)
*H01M 4/136* (2010.01)     *H01M 10/0525* (2010.01)

(52) Cooperative Patent Classification (CPC):
C01G 53/44; H01M 4/36; H01M 4/525;
H01M 4/5825; H01M 10/052; H01M 10/0525;
Y02E 60/10

(86) International application number:
PCT/CN2023/082479

(87) International publication number:
WO 2024/130869 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.12.2022 CN 202211651707

(71) Applicant: Eve Power Co., Ltd.
Jingmen, Hubei 448000 (CN)

(72) Inventors:
• WU, Tingting
  Jingmen, Hubei 448000 (CN)
• ZHANG, Lin
  Jingmen, Hubei 448000 (CN)
• YUAN, Dingding
  Jingmen, Hubei 448000 (CN)

(74) Representative: Herrero & Asociados, S.L.
Cedaceros, 1
28014 Madrid (ES)

(54) **TERNARY BLENDED LITHIUM MANGANESE IRON PHOSPHATE MATERIAL, AND PREPARATION METHOD THEREFOR AND USE THEREOF**

(57) The present application relates to a ternary blended lithium manganese iron phosphate material, and a preparation method therefor and the use thereof. The ternary blended lithium manganese iron phosphate material comprises a ternary single crystal material, a ternary polycrystal material and lithium manganese iron phosphate, wherein the particle size distribution of the ternary single crystal material is between that of the ternary polycrystal material and that of lithium manganese iron phosphate. In the present application, the particle size distribution of the ternary single crystal material is between large particles of the ternary polycrystal material and small particles of lithium manganese iron phosphate; the particle size distribution of the blended material is wider; and the particles having a relatively small particle size can fill gaps among larger particles, such that the compaction density of the material is improved to a certain extent. According to the particle size distribution, the overall particle size distribution of the lithium manganese iron phosphate material blended with the ternary polycrystal and ternary single crystal material is widened, such that the stability of lithium ions during the in-out charge-discharge process of ternary material lattices is improved, and an elastic strain force is provided for the material to be impacted by an external force, thereby improving the safety and cycling performance of the material.

FIG. 1

EP 4 621 874 A1

## Description

The present application claims the priority of Chinese patent application No. 202211651707.X, filed on December 21, 2022, in the China National Intellectual Property Administration, and contents of which are incorporated herein by its entireties.

## TECHNICAL FIELD

The present disclosure relates to the field of manufacturing ternary positive electrode materials; in particular, relates to a battery material of ternary co-doped with lithium manganese iron phosphate; and more specifically relates to a material of ternary co-doped with lithium manganese iron phosphate, a method of manufacturing the material, and an application of the material.

## BACKGROUND

Humans need renewable energy to replace fossil fuels and reduce the amount of $CO_2$ emission. An advanced material for energy storage is a development trend in the future. A lithium-ion battery has excellent energy density and cycle durability, and is light in weight. Therefore, the lithium-ion battery meets growing demands for energies. Studies of the lithium battery are currently hot topics in physics, chemistry, materials, and other technical fields. In the art, positive electrode materials commonly used in the lithium batteries in the market include lithium cobaltate, ternary, lithium iron phosphate, and lithium manganese iron phosphate.

Various positive electrode materials have various advantages and disadvantages due to their own structural characteristics. A polycrystalline ternary is a secondary particle agglomerate at a micro-meter scale and has a higher capacity and better multiplication performance. However, a large number of grain boundaries are present inside the secondary particle agglomerate. While the battery is being charged and is discharging, a lattice constant and a unit cell volume may be changed, generating anisotropic stresses, leading to the secondary particles to be fragmented. In this way, side reactions may be increased rapidly, impedance may be increased, and cyclic performance may be reduced rapidly. Compared to the polycrystalline, a monocrystalline ternary has better mechanical strength, such that particle fragmentation is prohibited, the number of side reactions is decreased, and structure of the material may be stable. Therefore, the cyclic performance and thermal stability of the monocrystalline ternary is higher than that of the polycrystalline ternary. In addition, high voltage resistance performance of the monocrystalline ternary is also better than that of the polycrystalline ternary. However, there are higher requirements for a process of manufacturing the monocrystalline ternary, a manufacturing cost of the monocrystalline ternary is higher than that of the polycrystalline ternary. Further, when a same voltage is applied, multiplication performance and a capacity of the monocrystalline ternary is less than that of the polycrystalline ternary. Lithium manganese iron phosphate is a phosphate type of anode material for the lithium-ion battery and is formed by doping a certain proportion of manganese with lithium iron phosphate. Lithium manganese iron phosphate maintains an olivine-type stable structure of lithium iron phosphate. During the charging and discharging process, the structure of the lithium manganese iron phosphate is more stable. Even if all lithium ions are deintercalated in the charging process, the structural may not be collapsed. Therefore, the material provides better safety and has a lower manufacturing cost. For applying the pure lithium manganese iron phosphate, the manufacturing cost is lower than the ternary material, safety of the lithium manganese iron phosphate is better than that of the ternary material, and an energy density of the lithium manganese iron phosphate is higher than that of the lithium iron phosphate. However, conductivity of the lithium manganese iron phosphate is limited.

In order to achieve the performance and the safety at the same time, the ternary and the lithium manganese iron phosphate are composite with each other, further integrating advantages of both materials. By composition, shortcomings of the two materials are complemented, such that the energy density is increased, and a more comprehensive and integrated battery performance may be achieved. However, since the polycrystalline ternary is significantly different from the monocrystalline ternary, the cyclic performance and safety may be affected and limited.

## SUMMARY OF THE DISCLOSURE

Due to the technical problem in the art, the present disclosure provides a material of ternary co-doped with lithium manganese iron phosphate, a method of preparing the material, and an application of the material. In the present disclosure, in addition to the polycrystalline ternary being doped with lithium manganese iron phosphate, a monocrystalline ternary is further doped therein. According to distribution of particle sizes, overall distribution of particle sizes of the material of the polycrystalline ternary and the monocrystalline ternary being co-doped with lithium manganese iron phosphate is wider. In this way, stability of lithium ions entering and leaving out of the lattice of the ternary material in the charging/discharging process may be improved, and an elastic strain force is provided for the material when the material is impacted by an external force, such that safety and the cycled performance of the doped material may be improved.

To achieve the objectives, the present disclosure provides following technical solutions.

In a first aspect, the present disclosure provides a material of ternaries co-doped with lithium manganese iron phosphate, comprising a monocrystalline ternary, a polycrystalline ternary, and lithium manganese iron phosphate.

A particle size distribution of the monocrystalline ternary is between the polycrystalline ternary and the lithium manganese iron phosphate.

The particle size distribution indicates uniformity of particle sizes of the material. The particle size indicates a size of a single particle in the material. The overall particle size distribution of the material is adjusted by coping with single particles of various particle sizes.

Any ordinary skilled person in the art shall understand that the particle size distribution of the monocrystalline ternary is smaller than that of the polycrystalline ternary.

The particle size distribution of the monocrystalline ternary is between large particles of the polycrystalline ternary and small particles of the lithium manganese iron phosphate. After doping, the particle size distribution of the doped material is wider. Relatively small particles may fill gaps between large particles, such that compaction density of the material is improved to some extent. According to distribution of the particle sizes, the overall particle size distribution of the material of the polycrystalline ternary and the monocrystalline ternary being doped with the lithium manganese iron phosphate is wider. In this way, stability of lithium ions entering and leaving out of the lattice of the ternary material in the charging/discharging process may be improved, and an elastic strain force is provided for the material when the material is impacted by an external force, such that safety and the cycled performance of the doped material may be improved.

In some embodiments, a median particle size of the monocrystalline ternary is in a range from $4\mu m$ to $7\mu m$, such as $4\mu m$, $4.5\mu m$, $5\mu m$, $6\mu m$, $6.5\mu m$, or $7\mu m$. Values are not limited to the listed ones, and other values, which are within the range but are not listed, are also applicable.

In some embodiments, the particle size distribution of the monocrystalline ternary is in a range from 0.3 to 0.8, such as 0.3, 0.4, 0.5, 0.6, 0.7, and 0.8. Values are not limited to the listed ones, and other values, which are within the range but are not listed, are also applicable.

In some embodiments, a median particle size of the polycrystalline ternary is in a range from $10\mu m$ to $20\mu m$, such as $10\mu m$, $12\mu m$, $14\mu m$, $16\mu m$, $18\mu m$, and $20\mu m$. Values are not limited to the listed ones, and other values, which are within the range but are not listed, are also applicable.

In some embodiments, particle size distribution of the polycrystalline ternary is in a range from 0.8 to 1.2, such as 0.8, 0.9, 1, 1.1, or 1.2. Values are not limited to the listed ones, and other values, which are within the range but are not listed, are also applicable.

In some embodiments, a median particle size of the lithium manganese iron phosphate is in a range from $1\mu m$ to $2\mu m$, such as $1\mu m$, $1.2\mu m$, $1.4\mu m$, $1.6\mu m$, $1.8\mu m$, or $2\mu m$. Values are not limited to the listed ones, and other values, which are within the range but are not listed, are also applicable.

In some embodiments, particle size distribution of the lithium manganese iron phosphate is in a range from 0.2 to 0.4, such as 0.2, 0.25, 0.3, 0.35, or 0.4. Values are not limited to the listed ones, and other values, which are within the range but are not listed, are also applicable.

In some embodiments, masses of the monocrystalline ternary, the polycrystalline ternary, and the lithium manganese iron phosphate are distributed according to following grading formula:

$C/(A+B)=\alpha/(1-\alpha)$, $0.5\leq\alpha<1$. For example, the $\alpha$ may be 0.5, 0.6, 0.7, 0.8, or 0.9. Values are not limited to the listed ones, and other values, which are within the range but are not listed, are also applicable.

$A/B=\beta/(1-\beta)$, $0.6\leq\beta<1$. For example, the $\beta$ may be 0.6, 0.7, 0.8, 0.9, or 0.95. Values are not limited to the listed ones, and other values, which are within the range but are not listed, are also applicable.

The A is a mass of the polycrystalline ternary, the B is a mass of the monocrystalline ternary, and the C is a mass of the lithium manganese iron phosphate.

By grading the materials, proportions of each material may be determined quickly and accurately, such that the positive electrode material having more comprehensive and integrated battery performance is prepared.

In some embodiments, the monocrystalline ternary is prepared by performing operations of:

(a) Mixing a nickel-cobalt-manganese hydroxide precursor, a lithium source, and a first additive to obtain a first mixture; performing a first sintering on the first mixture to obtain a monocrystalline ternary sinter material.
(b) Mixing the monocrystalline ternary sinter material and a second additive to obtain a second mixture, performing a second sinter on the second mixture to obtain the monocrystalline ternary.

The monocrystalline ternary provided by the present disclosure has high mechanical strength and fewer grain boundaries. The structural stability of the material during the cycling processes is ensured. Co-doping the monocrystalline ternary and. the polycrystalline ternary with the lithium manganese iron phosphate improves the structural stability of the material, reduces occurrence of interfacial side reactions during the cycling process, and improves the cyclic performance of the material.

In some embodiments, in the operation (a), the first additive comprises any one of or a combination of any two of: strontium carbonate, aluminium oxide, zirconium hydroxide, zirconium dioxide, lithium nitrate, magnesium dioxide, niobium oxide, yttrium trioxide, aluminium phosphate, and tungsten trioxide. Typical unlimited combinations include combination of strontium carbonate and aluminium oxide, combination of aluminium oxide and zirconium hydroxide, combination of zirconium hydroxide and zirconium dioxide, combination of zirconium dioxide and lithium nitrate, combination of lithium nitrate and magnesium dioxide, combination of magnesium dioxide and niobium oxide, combination of niobium oxide and yttrium trioxide, combination of yttrium trioxide and aluminium phosphate, combination of aluminium phosphate and tungsten trioxide, combination of strontium carbonate, aluminium oxide and zirconium hydroxide; combination of zirconium hydroxide, zirconium dioxide and lithium nitrate; combination of lithium nitrate, magnesium dioxide and niobium oxide; combination of niobium oxide, yttrium trioxide and aluminium phosphate; combination of yttrium trioxide, aluminium phosphate and tungsten trioxide; combination of strontium carbonate, aluminium oxide, zirconium hydroxide, zirconium dioxide and lithium nitrate; combination of zirconium hydroxide, zirconium dioxide, lithium nitrate, magnesium dioxide and niobium oxide; or combination of magnesium dioxide, niobium oxide, yttrium trioxide, aluminium phosphate and tungsten trioxide.

In some embodiments, a temperature of the first sintering in the operation (a) is in a range from 750°C to 950°C, such as 750°C, 800°C, 850°C, 900°C, or 950°C. Values are not limited to the listed ones, and other values, which are within the range but are not listed, are also applicable.

In some embodiments, a time length of the first sintering in the operation (a) is in a range from 10h to 15h, such as 10h, 11h, 12h, 13h, 14h, or 15h. Values are not limited to the listed ones, and other values, which are within the range but are not listed, are also applicable.

In some embodiments, the second additive in the operation (b) comprises any one of or a combination of any two of: metal fluorides, lithium compounds, silicates, phosphates, and oxides. Typical and unlimited combinations include: combination of fluoride and lithium compounds; combination of lithium compounds and silicates, combination of silicates and phosphates, combination of phosphates and oxides; combination of fluoride, lithium compounds and silicates; combination of lithium compounds, silicates and phosphates; combination of silicates, phosphates and oxides; combination of fluoride, lithium compounds, silicates and phosphates; combination of lithium compounds, silicates, phosphates and oxides; or combination of fluoride, lithium compounds, silicates, phosphates and oxides.

In some embodiments, the metal comprises any one of or a combination of any two of: V, Al, Zn, Zr, Ti, Mg, Ru, La, and Ce. Typical and unlimited combinations include: combination of Al and Zn, combination of Zn and Zr, combination of Zr and Ti, combination of Ti and Mg, combination of Mg and Ru, combination of Ru and La, combination of La and Ce; combination of V, Al and Zn; combination of Zr, Ti and Mg; combination of Ru, La and Ce; combination of V, Al, Zn and Zr; combination of Zn, Zr, Ti and Mg; combination of Ti, Mg, Ru, and La; combination of Mg, Ru, La, and Ce; combination of V, Al, Zn, Zr, Ti and Mg; and combination of Ti, Mg, Ru, La and Ce.

In some embodiments, a temperature of the second sintering in the operation (b) is in a range from 400°C to 500°C, such as 400°C, 420°C, 440°C, 460°C, 480°C, or 500°C. Values are not limited to the listed ones, and other values, which are within the range but are not listed, are also applicable.

In some embodiments, a time length of the second sintering in the operation (b) is in a range from 3h to 6h, such as 3h, 3.5h, 4h, 5h, 5.5h, or 6h. Values are not limited to the listed ones, and other values, which are within the range but are not listed, are also applicable.

In some embodiments, the polycrystalline ternary is prepared by performing operations of:

Mixing the nickel-cobalt-manganese hydroxide precursor, the lithium source, and an additive to obtain another mixture, and sintering the another mixture at a high temperature to obtain the polycrystalline ternary.

In some embodiments, the additive comprises any one of or a combination of any two of: strontium carbonate, aluminium oxide, zirconium hydroxide, zirconium dioxide, lithium nitrate, magnesium dioxide, niobium oxide, yttrium trioxide, aluminium phosphate, and tungsten trioxide. Typical and unlimited combinations include: combination of strontium carbonate and aluminium oxide, combination of aluminium oxide and zirconium hydroxide, combination of zirconium hydroxide and zirconium dioxide, combination of zirconium dioxide and lithium nitrate, combination of lithium nitrate and magnesium dioxide, combination of magnesium dioxide and niobium oxide, combination of niobium oxide and yttrium trioxide, combination of yttrium trioxide and aluminium phosphate, combination of aluminium phosphate and tungsten trioxide; combination of strontium carbonate, aluminium oxide and zirconium hydroxide; combination of zirconium hydroxide, zirconium dioxide and lithium nitrate; combination of lithium nitrate, magnesium dioxide and niobium oxide; combination of niobium oxide, yttrium trioxide and aluminium phosphate; combination of yttrium trioxide, aluminium phosphate and tungsten trioxide; combination of strontium carbonate, aluminium oxide, zirconium hydroxide, zirconium dioxide and lithium nitrate; combination of zirconium hydroxide, zirconium dioxide, lithium nitrate, magnesium dioxide and niobium oxide; or combination of magnesium dioxide, niobium oxide, yttrium trioxide, aluminium phosphate and tungsten trioxide.

In some embodiments, a temperature of the high-temperature sintering is in a range from 750°C to 950°C, such as 750°C, 800°C, 850°C, 900°C, or 950°C. Values are not limited to the listed ones, and other values, which are within the range but are not listed, are also applicable.

In some embodiments, a time length of the high-temperature sintering is in a range from 10h to 15h, such as 10h, 11h, 12h, 13h, 14h, or 15h. Values are not limited to the listed ones, and other values, which are within the range but are not listed, are also applicable.

In some embodiments, rolling, jaw breaking, crushing, and filtering are performed after the high-temperature sintering.

In some embodiments, the lithium manganese iron phosphate is prepared by performing operations of:

(i) in a liquid phase system, mixing a lithium manganese iron phosphate precursor, a lithium source, and a carbon source to obtain a third mixture; drying the third mixture to obtain the lithium manganese iron phosphate precursor; and

(ii) sintering the lithium manganese iron phosphate precursor when being present in an inert gas, obtaining the lithium manganese iron phosphate.

In some embodiments, the drying in the operation (i) comprises spraying drying.

In some embodiments, a temperature of the sintering in the operation (ii) is in a range from 500°C to 800°C, such as 500°C, 550°C, 600°C, 700°C, or 800°C. Values are not limited to the listed ones, and other values, which are within the range but are not listed, are also applicable.

In some embodiments, a time length of the sintering in the operation (ii) is in a range from 5h to 18h, such as 5h, 8h, 10h, 15h, or 18h. Values are not limited to the listed ones, and other values, which are within the range but are not listed, are also applicable.

In some embodiments, the lithium manganese iron phosphate is carbon coated lithium manganese iron phosphate.

In a second aspect, the present disclosure provides a method of preparing a material of ternaries co-doped with lithium manganese iron phosphate. The method includes:

Mixing a monocrystalline ternary, a polycrystalline ternary, and lithium manganese iron phosphate according to a grading formula to obtain the material of ternaries co-doped with lithium manganese iron phosphate.

The grading formula is as follows:

$$C/(A+B)=\alpha/(1-\alpha), \quad 0.5 \leq \alpha < 1;$$

$$A/B=\beta/(1-\beta), \quad 0.6 \leq \beta < 1.$$

The mixing requires the three components to be evenly dispersed.

In a third aspect, the present disclosure provides a positive electrode sheet, including the material of ternaries co-doped with lithium manganese iron phosphate as described in the above.

In a fourth aspect, the present disclosure provides a battery, including the material of ternaries co-doped with lithium manganese iron phosphate.

According to the present disclosure, following technical effects can be achieved.

The particle size distribution of the monocrystalline ternary in the present disclosure is between the large particles of the polycrystalline ternary and the small particles of the lithium manganese iron phosphate. The particle size distribution of the doped material is wider after doping. The particles in the relatively small particle sizes can fill the gaps between the large particles, the compaction density of the material is improved to a certain extent. According to the particle sizes, the overall particle size distribution of the material of the polycrystalline ternary and the monocrystalline ternary co-doped with the lithium manganese iron phosphate material is wider. In this way, stability of lithium ions entering and leaving out of the lattice of the ternary material in the charging/discharging process may be improved, and an elastic strain force is provided for the material when the material is impacted by an external force, such that safety and the cycled performance of the doped material may be improved.

After reading and understanding the accompanying drawings and detailed description, other aspects can be understood.

**BRIEF DESCRIPTION OF THE DRAWINGS**

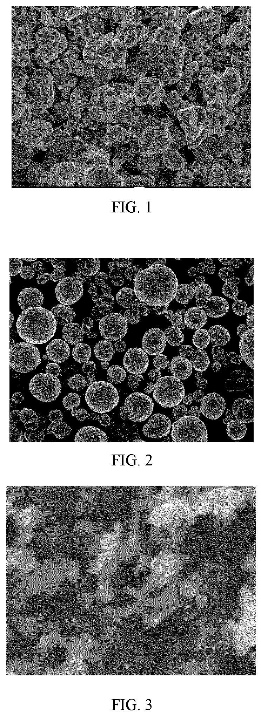

FIG. 1 is a scanning electron microscopic view of a monocrystalline ternary according to an embodiment 1 in the present disclosure.

FIG. 2 is a scanning electron microscopic view of a polycrystalline ternary according to an embodiment 1 in the present disclosure.

FIG. 3 is a scanning electron microscopic view of lithium manganese iron phosphate according to an embodiment 1 in the present disclosure.

## DETAILED DESCRIPTION

Technical solutions of the present disclosure are further described below by referring to the accompanying drawings and the specific embodiments. However, the following examples are only simple examples of the present disclosure and do not represent or limit the scope of the present disclosure. The scope of the present disclosure is subject to the appended claims.

Embodiment 1

The present embodiment provides a material of ternaries co-doped with lithium manganese iron phosphate. The material of ternaries co-doped with lithium manganese iron phosphate is composed of a monocrystalline ternary, a polycrystalline ternary, and lithium manganese iron phosphate.

Masses of the monocrystalline ternary, the polycrystalline ternary, and the lithium manganese iron phosphate are distributed according to the following grading formula:

$$C/(A+B)=\alpha/(1-\alpha), \quad \alpha=0.8;$$

and

$$A/B=\beta/(1-\beta), \quad \beta=0.7.$$

In the formula, the A is a mass of the polycrystalline ternary, the B is a mass of the monocrystalline ternary, and the C is a mass of the lithium manganese iron phosphate. Exemplarily, A=0.7 kg, B=0.3 kg, and C=4 kg. The values of the A, the B, and the C are only examples, and any other mass values satisfying the grading formula are within the scope of the present embodiment.

The material of ternaries co-doped with lithium manganese iron phosphate is prepared by performing the following method.

According to the grading formula, the monocrystalline ternary, the polycrystalline ternary, and the lithium manganese iron phosphate are mixed to obtain the material of ternaries co-doped with lithium manganese iron phosphate.

The monocrystalline ternary is prepared by the following method.

(a) An NCM523 nickel-cobalt-manganese hydroxide precursor, lithium hydroxide, and strontium carbonate are mixed, and a first sintering is performed on the mixture at 850°C for 12h, such that a monocrystalline ternary sinter material is obtained.

(b) The monocrystalline ternary sinter material and $V_2O_5$ are mixed, and a second sinter is performed on the mixture at 450°C for 5h. Rolling, jaw breaking, crushing, and filtering are performed on the sintered mixture to obtain the monocrystalline ternary. A median particle size of the monocrystalline ternary is 5 $\mu$m, and particle size distribution of monocrystalline ternary is 0.5.

The polycrystalline ternary is prepared by the following method.

The NCM523 nickel-cobalt-manganese hydroxide precursor, the lithium hydroxide, and the aluminium phosphate are mixed and are sintered at a high temperature of 850°C for 12h. Rolling, jaw breaking, crushing, and filtering are performed on the sintered mixture to obtain the polycrystalline ternary. A median particle size of the polycrystalline ternary is 15 $\mu$m, and particle size distribution of the polycrystalline ternary is 1.

The lithium manganese iron phosphate is prepared by the following method.

(i) In a liquid phase system, a lithium manganese iron phosphate precursor, lithium hydroxide, and glucose are mixed, sprayed, and dried to obtain the lithium manganese iron phosphate precursor.

(ii) The lithium manganese iron phosphate precursor is sintered when being present in an inert gas, such that the lithium manganese iron phosphate is obtained. The lithium manganese iron phosphate is carbon coated lithium manganese iron phosphate. A median particle size of the lithium manganese iron phosphate is 1.5 $\mu$m, and particle size distribution of the lithium manganese iron phosphate is 0.3.

Embodiment 2

The present embodiment provides a material of ternaries co-doped with lithium manganese iron phosphate. The material of ternaries co-doped with lithium manganese iron phosphate is composed of a monocrystalline ternary, a polycrystalline ternary, and lithium manganese iron phosphate. Masses of the monocrystalline ternary, the polycrystalline ternary, and the lithium manganese iron phosphate are distributed according to the following grading formula:

$$C/(A+B)=\alpha/(1-\alpha), \quad \alpha=0.5;$$

and

$$A/B=\beta/(1-\beta), \quad \beta=0.6.$$

In the formula, the A is a mass of the polycrystalline ternary, the B is a mass of the monocrystalline ternary, and the C is a mass of the lithium manganese iron phosphate.

The material of ternaries co-doped with lithium manganese iron phosphate is prepared by performing the following method.

According to the grading formula, the monocrystalline ternary, the polycrystalline ternary, and the lithium manganese iron phosphate are mixed to obtain the material of ternaries co-doped with lithium manganese iron phosphate.

The monocrystalline ternary is prepared by the following method.

(a) An NCM523 nickel-cobalt-manganese hydroxide precursor, lithium nitrate, and zirconium hydroxide are mixed, and a first sintering is performed on the mixture at 750°C for 15h, such that a monocrystalline ternary sinter material is obtained.

(b) The monocrystalline ternary sinter material and magnesium silicate are mixed, and a second sinter is performed on the mixture at 400°C for 6h. Rolling, jaw breaking, crushing, and filtering are performed on the sintered mixture to obtain the monocrystalline ternary. A median particle size of the monocrystalline ternary is 4 $\mu$m, and particle size distribution of monocrystalline ternary is 0.3.

The polycrystalline ternary is prepared by the following method.

The NCM523 nickel-cobalt-manganese hydroxide precursor, the lithium nitrate, and niobium oxide are mixed and are sintered at a high temperature of 750°C for 15h. Rolling, jaw breaking, crushing, and filtering are performed on the sintered mixture to obtain the polycrystalline ternary. A median particle size of the polycrystalline ternary is 10 $\mu$m, and particle size distribution of the polycrystalline ternary is 0.8.

The lithium manganese iron phosphate is prepared by the following method.

(i) In a liquid phase system, a lithium manganese iron phosphate precursor, lithium nitrate, and starch are mixed, sprayed, and dried to obtain the lithium manganese iron phosphate precursor.

(ii) The lithium manganese iron phosphate precursor is sintered when being present in an inert gas, such that the lithium manganese iron phosphate is obtained. The lithium manganese iron phosphate is carbon coated lithium manganese iron phosphate. A median particle size of the lithium manganese iron phosphate is 1 $\mu$m, and particle size distribution of the lithium manganese iron phosphate is 0.2.

Embodiment 3

The present embodiment provides a material of ternaries co-doped with lithium manganese iron phosphate. The material of ternaries co-doped with lithium manganese iron phosphate is composed of a monocrystalline ternary, a polycrystalline ternary, and lithium manganese iron phosphate. Masses of the monocrystalline ternary, the polycrystalline ternary, and the lithium manganese iron phosphate are distributed according to the following grading formula:

$$C/(A+B)=\alpha/(1-\alpha),\quad \alpha=0.9;$$

and

$$A/B=\beta/(1-\beta),\quad \beta=0.9.$$

In the formula, the A is a mass of the polycrystalline ternary, the B is a mass of the monocrystalline ternary, and the C is a mass of the lithium manganese iron phosphate.

The material of ternaries co-doped with lithium manganese iron phosphate is prepared by performing the following method.

According to the grading formula, the monocrystalline ternary, the polycrystalline ternary, and the lithium manganese iron phosphate are mixed to obtain the material of ternaries co-doped with lithium manganese iron phosphate.

The monocrystalline ternary is prepared by the following method.

(a) An NCM523 nickel-cobalt-manganese hydroxide precursor, lithium acetate and magnesium dioxide are mixed, and a first sintering is performed on the mixture at 950°C for 10h, such that a monocrystalline ternary sinter material is obtained.

(b) The monocrystalline ternary sinter material and zinc fluoride are mixed, and a second sinter is performed on the mixture at 500°C for 3h. Rolling, jaw breaking, crushing, and filtering are performed on the sintered mixture to obtain the monocrystalline ternary. A median particle size of the monocrystalline ternary is 7 μm, and particle size distribution of monocrystalline ternary is 0.8.

The polycrystalline ternary is prepared by the following method.

The NCM523 nickel-cobalt-manganese hydroxide precursor, lithium acetate and yttrium trioxide are mixed and are sintered at a high temperature of 950°C for 10h. Rolling, jaw breaking, crushing, and filtering are performed on the sintered mixture to obtain the polycrystalline ternary. A median particle size of the polycrystalline ternary is 20 μm, and particle size distribution of the polycrystalline ternary is 1.2.

The lithium manganese iron phosphate is prepared by the following method.

(i) In a liquid phase system, a lithium manganese iron phosphate precursor, lithium acetate, and citric acid are mixed, sprayed, and dried to obtain the lithium manganese iron phosphate precursor.

(ii) The lithium manganese iron phosphate precursor is sintered when being present in an inert gas, such that the lithium manganese iron phosphate is obtained. The lithium manganese iron phosphate is carbon coated lithium manganese iron phosphate. A median particle size of the lithium manganese iron phosphate is 2 μm, and particle size distribution of the lithium manganese iron phosphate is 0.4.

Embodiment 4

The present embodiment provides a material of ternaries co-doped with lithium manganese iron phosphate. A difference between the material of the present embodiment and the material in the embodiment 1 is that α=0.4 in the present embodiment.

Embodiment 5

The present embodiment provides a material of ternaries co-doped with lithium manganese iron phosphate. A difference between the material of the present embodiment and the material in the embodiment 1 is that β=0.5 in the present embodiment.

Embodiment 6

The present embodiment provides a material of ternaries co-doped with lithium manganese iron phosphate. A difference between the material of the present embodiment and the material in the embodiment 1 is that a median particle size of the monocrystalline ternary is 8 μm.

Embodiment 7

The present embodiment provides a material of ternaries co-doped with lithium manganese iron phosphate. A difference between the material of the present embodiment and the material in the embodiment 1 is that a median particle size of the monocrystalline ternary is 2 $\mu$m.

Comparative example 1

The present embodiment provides a material of ternaries co-doped with lithium manganese iron phosphate. A difference between the material of the present example and the material in the embodiment 1 is that the material is composed of the polycrystalline ternary and the lithium manganese iron phosphate.

$$C/A=\alpha/(1-\alpha), \quad \alpha=0.8.$$

In the present example, the A is a mass of the polycrystalline ternary, and the C is a mass of the lithium manganese iron phosphate.

Comparative example 2

The present embodiment provides a material of ternaries co-doped with lithium manganese iron phosphate. A difference between the material of the present example and the material in the embodiment 1 is that the particle size distribution of the monocrystalline ternary is the same as that of the lithium manganese iron phosphate.

Comparative example 3

The present embodiment provides a material of ternaries co-doped with lithium manganese iron phosphate. A difference between the material of the present example and the material in the embodiment 1 is that the particle size distribution of the lithium manganese iron phosphate is between the monocrystalline ternary and the polycrystalline ternary.

The above positive electrode materials are used to manufacture positive electrode sheets, lithium-ion batteries are assembled based on GB 31241-2014, and the assembled batteries are tested.

Test conditions:

Gram capacity test is performed. The battery is charged, at 25°C, 0.2C, and at a constant current and a constant voltage, to reach 4.2V. Charging is stopped at 0.02C. The battery then discharges, at 0.2C and at direct current, to reach 2.5V.

Cycling test is performed at 25°C, 2.5-4.2V, 1C/1C.

Test results are shown in Table 1.

Table 1

| Test number | Compaction density (g/cm$^3$) | 0.2C gram capacity (mAh/g) | cyclic capacity retention rate in 200 wk (%) |
|---|---|---|---|
| Embodiment 1 | 2.63 | 160 | 98.8 |
| Embodiment 2 | 2.70 | 165 | 98.5 |
| Embodiment 3 | 2.55 | 159 | 99.1 |
| Embodiment 4 | 2.38 | 155 | 98.2 |
| Embodiment 5 | 2.33 | 153 | 96.7 |
| Embodiment 6 | 2.26 | 156 | 97.1 |
| Embodiment 7 | 2.30 | 157 | 97.5 |
| Comparative example 1 | 2.15 | 153 | 96.9 |
| Comparative example 2 | 2.28 | 156 | 97.8 |
| Comparative example 3 | 2.34 | 158 | 97.4 |

Following conclusion can be drawn from Table 1

(1) As can be seen from Embodiments 1-3 and the Comparative example 1, the present disclosure provides the material of ternaries co-doped with the lithium manganese iron phosphate, a preparation method of the material, and an application of the material. In addition to the polycrystalline ternary being doped with lithium manganese iron phosphate, a monocrystalline ternary is further doped therein. According to the particle size distribution, the overall particle size distribution of the material of the polycrystalline ternary and the monocrystalline ternary co-doped with the lithium manganese iron phosphate is wider. In this way, stability of lithium ions entering and leaving out of the lattice of the ternary material in the charging/discharging process may be improved, and an elastic strain force is provided for the material when the material is impacted by an external force, such that safety and the cycled performance of the doped material may be improved.

(2) As can be seen from the Embodiments 4, 5 and the Comparative example 1, for the material of ternaries co-doped with the lithium manganese iron phosphate according to the grading formula provided in the present disclosure, the composite material has an optimized configuration of a space utilization rate and the performance. The positive electrode material having high compaction, a high energy density, and excellent cyclic performance is obtained.

(3) As can be seen from the Embodiments 6, 7 and the Comparative example 1, when particles of the monocrystalline ternary in the present disclosure are not within a preferred range of median particle sizes, the space utilization rate during the doping process may not be improved, and the performance of the positive electrode material may be affected.

(4) As can be seen from comparison example 1, in thin addition to the polycrystalline ternary being doped with lithium manganese iron phosphate, a monocrystalline ternary is further doped therein, such that the performance of the material is improved significantly, and the compaction density is improved.

(5) As can be seen from the Comparative examples 2 and 3 and the Embodiment 1, the overall particle size distribution of the material of ternaries co-doped with the lithium manganese iron phosphate is wider, the compaction density and the cyclic performance of the material is significantly improved. However, when the particle size distribution of the doped monocrystalline ternary is inappropriate, the effect of filling gaps due to the materials having various particle size distributions may not be achieved. In this way, the compaction density may be reduced, and electrical properties of the material may be affected.

In summary, the particle size distribution of the monocrystalline ternary in the present disclosure is between the large particles of the polycrystalline ternary and the small particles of the lithium manganese iron phosphate. The particle size distribution of the material is wider after doping. The particles having relatively small particle sizes can fill the gaps between the large particles, such that the compaction density of the material is increased to some extent. According to the particle size distribution, the overall particle size distribution of the material of the polycrystalline ternary and the monocrystalline ternary being co-doped with the lithium manganese iron phosphate is wider. In this way, the compaction density of the material may be improved to a certain extent, stability of lithium ions entering and leaving out of the lattice of the ternary material in the charging/discharging process may be improved, and an elastic strain force is provided for the material when the material is impacted by an external force, such that safety and the cycled performance of the doped material may be improved.

## Claims

1. A material of ternaries co-doped with lithium manganese iron phosphate, comprising a monocrystalline ternary, a polycrystalline ternary, and lithium manganese iron phosphate,
wherein a particle size distribution of the monocrystalline ternary is between the polycrystalline ternary and the lithium manganese iron phosphate.

2. The material of ternaries co-doped with lithium manganese iron phosphate according to claim 1, wherein a median particle size of the monocrystalline ternary is in a range from $4\mu m$ to $7\mu m$.

3. The material of ternaries co-doped with lithium manganese iron phosphate according to claim 1 or 2, wherein the particle size distribution of the monocrystalline ternary is in a range from 0.3 to 0.8.

4. The material of ternaries co-doped with lithium manganese iron phosphate according to any one of claims 1-3, wherein a median particle size of the polycrystalline ternary is in a range from $10\mu m$ to $20\mu m$.

5. The material of ternaries co-doped with lithium manganese iron phosphate according to any one of claims 1-4, wherein the particle size distribution of the polycrystalline ternary is in a range from 0.8 to 1.2.

6. The material of ternaries co-doped with lithium manganese iron phosphate according to any one of claims 1-5, wherein a median particle size of the lithium manganese iron phosphate is in a range from 1μm to 2μm.

7. The material of ternaries co-doped with lithium manganese iron phosphate according to any one of claims 1-6, wherein the particle size distribution of the lithium manganese iron phosphate is in a range from 0.2 to 0.4.

8. The material of ternaries co-doped with lithium manganese iron phosphate according to any one of claims 1-7, wherein masses of the monocrystalline ternary, the polycrystalline ternary, and the lithium manganese iron phosphate are distributed according to following grading formula:

$$C/(A+B)=\alpha/(1-\alpha), \quad 0.5 \leq \alpha < 1,$$

$$A/B=\beta/(1-\beta), \quad 0.6 \leq \beta < 1,$$

wherein the A is a mass of the polycrystalline ternary, the B is a mass of the monocrystalline ternary, and the C is a mass of the lithium manganese iron phosphate.

9. The material of ternaries co-doped with lithium manganese iron phosphate according to any one of claims 1 to 8, wherein the monocrystalline ternary is prepared by performing operations of:

(a) mixing a nickel-cobalt-manganese hydroxide precursor, a lithium source, and a first additive to obtain a first mixture; performing a first sintering on the first mixture to obtain a monocrystalline ternary sinter material; and
(b) mixing the monocrystalline ternary sinter material and a second additive to obtain a second mixture, performing a second sinter on the second mixture to obtain the monocrystalline ternary.

10. The material of ternaries co-doped with lithium manganese iron phosphate according to claim 9, wherein, in the operation (a), the first additive comprises any one of or a combination of any two of: strontium carbonate, aluminium oxide, zirconium hydroxide, zirconium dioxide, lithium nitrate, magnesium dioxide, niobium oxide, yttrium trioxide, aluminium phosphate, and tungsten trioxide;

preferably, a temperature of the first sintering in the operation (a) is in a range from 750°C to 950°C;
preferably, a time length of the first sintering in the operation (a) is in a range from 10h to 15h;
preferably, the second additive in the operation (b) comprises any one of or a combination of any two of: metal fluorides, lithium compounds, silicates, phosphates, and oxides;
preferably, the metal comprises any one of or a combination of any two of: V, Al, Zn, Zr, Ti, Mg, Ru, La, and Ce;
preferably, a temperature of the second sintering in the operation (b) is in a range from 400°C to 500°C;
preferably, a time length of the second sintering in the operation (b) is in a range from 3h to 6h.

11. The material of ternaries co-doped with lithium manganese iron phosphate according to any one of claims 1-10, wherein the polycrystalline ternary is prepared by performing operations of:

mixing the nickel-cobalt-manganese hydroxide precursor, the lithium source, and an additive to obtain another mixture, and sintering the another mixture at a high temperature to obtain the polycrystalline ternary; wherein, preferably, the additive comprises any one of or a combination of any two of: strontium carbonate, aluminium oxide, zirconium hydroxide, zirconium dioxide, lithium nitrate, magnesium dioxide, niobium oxide, yttrium trioxide, aluminium phosphate, and tungsten trioxide;
preferably, a temperature of the high-temperature sintering is in a range from 750°C to 950°C;
preferably, a time length of the high-temperature sintering is in a range from 10h to 15h;
preferably, rolling, jaw breaking, crushing, and filtering are performed after the high-temperature sintering.

12. The material of ternaries co-doped with lithium manganese iron phosphate according to any one of claims 1-11, wherein the lithium manganese iron phosphate is prepared by performing operations of:

(i) in a liquid phase system, mixing a lithium manganese iron phosphate precursor, a lithium source, and a carbon source to obtain a third mixture; drying the third mixture to obtain the lithium manganese iron phosphate precursor; and

(ii) sintering the lithium manganese iron phosphate precursor when being present in an inert gas, obtaining the lithium manganese iron phosphate; wherein,

preferably, the drying in the operation (i) comprises spraying drying;
preferably, a temperature of the sintering in the operation (ii) is in a range from 500°C to 800°C;
preferably, a time length of the sintering in the operation (ii) is in a range from 5h to 18h;
preferably, the lithium manganese iron phosphate is carbon coated lithium manganese iron phosphate.

13. A method of preparing the material of ternaries co-doped with lithium manganese iron phosphate according to any one of claims 1-12, comprising:

mixing a monocrystalline ternary, a polycrystalline ternary, and lithium manganese iron phosphate according to a grading formula to obtain the material of ternaries co-doped with lithium manganese iron phosphate;
wherein the grading formula is as follows:

$$C/(A+B)=\alpha/(1-\alpha), \quad 0.5 \leq \alpha < 1,$$

$$A/B=\beta/(1-\beta), \quad 0.6 \leq \beta < 1.$$

14. A positive electrode sheet, comprising the material of ternaries co-doped with lithium manganese iron phosphate according to any one of claim 1 to 12.

15. A battery, comprising the material of ternaries co-doped with lithium manganese iron phosphate according to any one of claim 1 to 12.

FIG. 1

FIG. 2

FIG. 3

## INTERNATIONAL SEARCH REPORT

| International application No. |
| --- |
| **PCT/CN2023/082479** |

| A. | CLASSIFICATION OF SUBJECT MATTER |
| --- | --- |

H01M4/36(2006.01)i;H01M4/58(2010.01)i;H01M4/136(2010.01)i;H01M10/0525(2010.01)i

According to International Patent Classification (IPC) or to both national classification and IPC

| B. | FIELDS SEARCHED |
| --- | --- |

Minimum documentation searched (classification system followed by classification symbols)

IPC： H01M

Documentation searched other than minimum documentation to the extent that such documents are included in the fields searched

Electronic data base consulted during the international search (name of data base and, where practicable, search terms used)

CNTXT, ENTXTC, WPABSC, ENTXT, DWPI, CNKI: 电池, 锂, 三元, 镍, 钴, 锰, 磷酸, 铁, 锰, 单晶, 多晶, 二次, battery, cell, lithium, li, ternary, Ni, nickel, Co, cobalt, Mn, manganese, Fe, iron, phosphate, PO4, single, crystal, polycrystalline, second

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115799481 A (EVE ENERGY CO., LTD.) 14 March 2023 (2023-03-14)<br>claims 1-10 | 1-15 |
| Y | CN 109888235 A (GUANGDONG BRUNP RECYCLING TECHNOLOGY CO., LTD. et al.) 14 June 2019 (2019-06-14)<br>description, paragraphs 6-62 | 1-15 |
| Y | CN 111048760 A (JIANGSU LITHITECH LITHIUM ENERGY TECHNOLOGY CO., LTD.) 21 April 2020 (2020-04-21)<br>description, paragraphs 8-33 | 1-15 |
| Y | CN 108321385 A (BEIJING NATIONAL BATTERY TECHNOLOGY CO., LTD.) 24 July 2018 (2018-07-24)<br>description, paragraphs 6-55 | 1-15 |
| Y | CN 115020696 A (ENVISION POWER TECHNOLOGY (JIANGSU) CO., LTD. et al.) 06 September 2022 (2022-09-06)<br>description paragraphs 4-66 | 1-15 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **15 May 2023** | **15 June 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/082479** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 109524642 A (SOUNDON NEW ENERGY TECHNOLOGY CO., LTD.) 26 March 2019 (2019-03-26) description, paragraphs [0005]-[0028] | 1-15 |
| A | WO 2022033584 A1 (BYD CO., LTD.) 17 February 2022 (2022-02-17) entire document | 1-15 |

Form PCT/ISA/210 (second sheet) (July 2022)

**INTERNATIONAL SEARCH REPORT**
Information on patent family members

International application No.

**PCT/CN2023/082479**

| Patent document cited in search report | | | Publication date (day/month/year) | Patent family member(s) | | | Publication date (day/month/year) |
|---|---|---|---|---|---|---|---|
| CN | 115799481 | A | 14 March 2023 | None | | | |
| CN | 109888235 | A | 14 June 2019 | None | | | |
| CN | 111048760 | A | 21 April 2020 | None | | | |
| CN | 108321385 | A | 24 July 2018 | None | | | |
| CN | 115020696 | A | 06 September 2022 | None | | | |
| CN | 109524642 | A | 26 March 2019 | None | | | |
| WO | 2022033584 | A1 | 17 February 2022 | KR | 20230049705 | A | 13 April 2023 |
| | | | | CN | 114079046 | A | 22 February 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211651707X